(19) Europäisches Patentamt
European Patent Office
Office européen des brevets

(11) EP 1 584 755 B1

(12) EUROPEAN PATENT SPECIFICATION

(45) Date of publication and mention of the grant of the patent:
**07.12.2016 Bulletin 2016/49**

(51) Int Cl.:
***E02F 9/22*** *(2006.01)* ***F15B 21/08*** *(2006.01)*
***F15B 11/16*** *(2006.01)*

(21) Application number: **04024485.7**

(22) Date of filing: **14.10.2004**

(54) **Method for compensating flow rate at neutral position of operation lever of construction equipment**

Verfahren zur Hydraulikpumpenförderstromkompensation in Baumaschinen bei Steuerhebelneutralstellung

Procédé pour la compensation du flux d'une pompe hydraulique pendant que la manette est dans sa position neutre

(84) Designated Contracting States:
**DE FR GB IT**

(30) Priority: **08.04.2004 KR 2004024047**

(43) Date of publication of application:
**12.10.2005 Bulletin 2005/41**

(73) Proprietor: **Volvo Construction Equipment Holding Sweden AB**
**631 85 Eskilstuna (SE)**

(72) Inventor: **Bae, Sang Ki**
**Changwon (KR)**

(74) Representative: **Dr. Weitzel & Partner Patent- und Rechtsanwälte mbB**
**Friedenstrasse 10**
**89522 Heidenheim (DE)**

(56) References cited:
**EP-A- 0 848 113**
**EP-A- 0 884 422**
**US-A- 5 447 027**
**US-B1- 6 173 572**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 584 755 B1

## Description

### BACKGROUND OF THE INVENTION

1. Field of the Invention

The present invention relates to a method for compensating a flow rate at a neutral position of an operation lever of construction equipment, capable of optimally controlling a displacement of a hydraulic pump according to an operating amount of the operation lever when the construction equipment such as an excavator is controlled on operation thereof using the operation lever.

More specifically, the present invention is directed to a method for compensating a flow rate at a neutral position of an operation lever of construction equipment, capable of enhancing the manipulation ability by enabling an actuator to be equally driven according to an operating amount of the operation lever even when an RPM (revolutions per minute) of an engine becomes different and of reducing consumption of fuel by minimizing a displacement of a hydraulic pump when the operation lever is located at the neutral position.

2. Description of the Related Art

US 6173572B1 discloses an apparatus for controlling the fluid flow in a fluid circuit. The features known from the document are summarized in the preamble of claim 1.

EP 0848113A1 discloses a hydraulic circuit system for a hydraulic working machine.

In general, an electrical operation lever used for construction equipment outputs a signal proportional to its operating amount by manipulation of an operator (exemplary output types of the signal may include analogue voltage, PWM (pulse width modulation), and communication signals, etc.).

In accordance with the signal inputted from the operation lever, controller outputs a controlling signal proportional to operating amounts of the operation lever and pedal to an electrical proportional valve, so that working units such as a boom, an arm, and a bucket are driven to readily perform necessary working such as excavating, loading and lifting.

In a hydraulic circuit using a plurality of hydraulic pumps, a displacement is controlled by a discharged pressure of its opposite hydraulic pump in order to efficiently use the construction equipment.

In other words, when a small load is generated from the opposite hydraulic pump, a flow rate is controlled to be much discharged, and thereby efficiency is enhanced, and simultaneously the displacement of the hydraulic pump is controlled according to a difference between a preset RPM of the engine and its current RPM, and thereby motive power of the engine is used to the maximum level.

Further, when an excessive load is generated from the working unit or the like, the discharged flow rate of the hydraulic pump is reduced, and thereby efficiency of the construction equipment is enhanced.

When the operation lever is operated, a signal from the operation lever is detected to control the discharged flow rate of the hydraulic pump, and then the displacement of the hydraulic pump is controlled according to the detected signal. Further, the discharged pressure of the hydraulic pump is detected in order to constantly maintain used motive power of the hydraulic pump, and then the displacement is controlled according to the detected pressure.

However, in order to optimally control the displacement of the hydraulic pump, various pilot signals are detected. As the displacement is controlled by the detected signals, the working units such as the boom are independently controlled. For this reason, the operator has a great difficulty in controlling the hydraulic pump in the optimal state in the working site.

### SUMMARY OF THE INVENTION

Therefore, an objective of the present invention is to provide a method for compensating a flow rate at a neutral position of an operation lever of construction equipment, capable of enhancing manipulation ability by previously setting a discharged flow rate of an hydraulic pump according to a working mode and by enabling an actuator to be equally driven according to an operating amount of the operation lever even when an RPM (revolutions per minute) of an engine becomes different.

Another objective of the present invention is to provide a method for compensating a flow rate at a neutral position of an operation lever of construction equipment, capable of reducing consumption of fuel by minimizing a discharged flow rate of a hydraulic pump when the operation lever is located at the neutral position.

In order to accomplish these objectives, according to one aspect of the present invention, there is provided a method for compensating a flow rate at a neutral position of an operation lever of construction equipment, in which the construction equipment has a hydraulic pump connected to an engine, an actuator connected to the hydraulic pump and driving a working unit, a control valve installed on a fluid channel between the hydraulic pump and the actuator, the operation lever manipulated by an operator and generating an operating signal for driving the working unit, means for detecting an operating amount of the operation lever, means for detecting RPM (revolutions per minute) of the engine, a controller controlling the control valve in response to the operating signal depending on the operating amount of the operation lever and the detecting signal depending on the RPM of the engine, the method comprising the steps of: setting a first flow rate required according to the operating amount of the operation lever and a second flow rate required according to the RPM of the engine; evaluating whether the flow rate belongs to a section to be compensated at the neutral position based on a difference between the first flow rate for the operation lever and the second flow rate for compensating the engine rpm; controlling the hydraulic pump to discharge the second flow rate for compensating the engine rpm when the second flow rate for compensating the engine rpm is more than the first flow rate for the operation lever; and controlling the hydraulic pump to discharge the flow rate corresponding to the operating amount of the operation lever when the first flow rate for the operation lever is more than the second flow rate for compensating the engine rpm.

According to another aspect of the present invention, there is provided a method for compensating a flow rate at a neutral position of an operation lever of construction equipment, in which the construction equipment has a hydraulic pump connected to an engine, an actuator connected to the hydraulic pump and driving a working unit, a control valve installed on a fluid channel between the hydraulic pump and the actuator, the operation lever manipulated by an operator and generating an operating signal for driving the working unit, means for detecting an operating amount of the operation lever, means for detecting RPM (revolutions per minute) of the engine, a controller controlling the control valve in response to the operating signal depending on the operating amount of the operation lever and the detecting signal depending on the RPM of the engine, the method comprising the steps of: setting a first flow rate required according to the operating amount of the operation lever and a second flow rate required according to the RPM of the engine; evaluating whether the operation lever is located at the neutral position by the operating signal, and when the operation lever is located at the neutral position, controlling a displacement of the hydraulic pump to discharge a minimum flow rate from the hydraulic pump; when the operation lever is not located at the neutral position and when the second flow rate for compensating the engine rpm is more than the first flow rate for the operation lever, controlling the hydraulic pump to discharge the second flow rate for compensating the engine rpm; and when the operation lever is not located at the neutral position and when the first flow rate for the operation lever is more than the second flow rate for compensating the engine rpm, controlling the hydraulic pump to discharge the flow rate corresponding to the operating amount of the operation lever.

Here, the operation lever may make use of any one of an electrical operation lever and a hydraulic operation lever.

## BRIEF DESCRIPTION OF THE DRAWINGS

The above and other features and advantages of the present invention will become more apparent to those of ordinary skill in the art by describing in detail preferred embodiments thereof with reference to the attached drawings in which:

Fig. 1 is a flow chart illustrating a method for compensating a flow rate at a neutral position of an operation lever of construction equipment in accordance with one embodiment of the present invention;

Fig. 2 is a graph illustrating a characteristic of a discharged flow rate against an operating amount of an operation lever in accordance with one embodiment of the present invention;

Fig. 3 is a schematic hydraulic circuit diagram used in a method for compensating a flow rate at a neutral position of an operation lever of construction equipment in accordance with one embodiment of the present invention;

Fig. 4 is a flow chart illustrating a method for compensating a flow rate at a neutral position of an operation lever of construction equipment in accordance with another embodiment of the present invention; and

Fig. 5 is a graph illustrating a characteristic of a discharged flow rate against an operating amount of an operation lever in accordance with another embodiment of the present invention.

## DETAILED DESCRIPTION OF THE INVENTION

The present invention will now be described more fully hereinafter with reference to the accompanying drawings.

As shown in Fig. 3, this invention is applied to any construction equipment which comprises an engine 10, a hydraulic pump 20 connected to the engine 10, an actuator 40 connected to the hydraulic pump 20 and driving a working unit such as a boom, a control valve 50 installed on a fluid channel between the hydraulic pump 20 and the actuator 40, an operation lever 60 manipulated by an operator and generating an operating signal for driving the working unit, operating amount detecting means 70 for detecting an operating amount of the operation lever, RPM (revolutions per minute) detecting means 80 for detecting an RPM of the engine 10, a controller 90 controlling the control valve 50 in response to the operating signal depending on the operating amount of the operation lever 60 and the detecting signal depending on the RPM of the engine, and an regulator 100 controlling a displacement of the hydraulic pump 20, all of which are used in the technical field of the invention. Hence, detailed description thereof will be omitted,

Hereinafter, a detailed description will be made regarding a method for compensating a flow rate when an operation lever of construction equipment is placed at a neutral position in accordance with one embodiment of the present invention, particularly, regarding application thereof, with reference to the accompanying drawings.

As shown in Figs. 1 to 3, an operating signal Pi and a detecting signal are inputted into the controller 90, wherein the operating signal Pi depends on the operating amount of the operation lever 60 which is detected by the operating amount detecting means 70, and the detecting signal depends on the RPM of the engine which is detected by the RPM detecting means 80 (S100).

At the controller 90, a required flow rate q depending on the operating amount of the operation lever 60 and a required flow rate $q_n$ depending on the RPM of the engine are previously determined (S200).

On the basis of a difference between the required flow rate q depending on the operating amount of the operation lever and the required flow rate $q_n$ depending on the RPM of the engine, it is evaluated whether the flow rate belongs to a section to be compensated at the neutral position or not (S500).

When it is evaluated in step S500 that the flow rate belongs to the section to be compensated at the neutral position (*i.e.* when $q < q_n$), a controlling signal inputted from the controller 90 controls the hydraulic pump 20 to discharge the required flow rate $q_n$ for compensating the RPM of the engine (S600).

When it is evaluated in step S500 that the required flow rate q for the operation lever is more than the required flow rate $q_n$ for compensating the engine rpm, the hydraulic pump is controlled such that the flow rate corresponding to the operating amount of the operation lever 60 is discharged (S700).

A detailed description will be made regarding a method for compensating a flow rate when an operation lever of construction equipment is placed at a neutral position in accordance with another embodiment of the present invention, particularly, regarding application thereof, with reference to Figs. 4 and 5.

As shown in Figs. 4 and 5, the operating signal Pi and the detecting signal are inputted into the controller 90, wherein the operating signal Pi depends on the operating amount of the operation lever 60 which is detected by the operating amount detecting means 70, and the detecting signal depends on the RPM of the engine which is detected by the RPM detecting means 80 (S100).

At the controller 90, the required flow rate q depending on the operating amount of the operation lever and the required flow rate $q_n$ depending on the RPM of the engine are previously determined (S200).

Based on a value of the required flow rate q depending on the operating signal Pi and the operating amount of the operation lever 60, it is evaluated whether the operation lever 60 is located at the neutral position or not (S300).

When it is evaluated in step S300 that the operation lever 60 is located at the neutral position (*i.e.* when Pi < Pin and indicated by "A" in Fig. 5), a controlling signal inputted from the controller 90 to the regulator 100 controls the displacement of the hydraulic pump 20 to minimize the discharged flow rate of the hydraulic pump 20.

In step S300, if the operation lever 60 is not located at the neutral position, it is evaluated whether or not the flow rate belongs to a section to be compensated at the neutral position, on the basis of the difference between the required flow rate q depending on the operating amount of the operation lever and the required flow rate $q_n$ depending on the RPM of the engine (S500).

When it is evaluated in step S300 that the operation lever 60 is not located at the neutral position and that the flow rate belongs to a section to be compensated at the neutral position (*i.e.* when $q < q_n$ and indicated by "B" in Fig. 5), a controlling signal inputted from the controller 90 controls the hydraulic pump 20 to discharge the required flow rate $q_n$ for compensating the RPM of the engine (S600).

When it is evaluated in step S300 that the operation lever 60 is not located at the neutral position and that the required flow rate q for the operation lever is more than the required flow rate $q_n$ for the RPM of the engine (*i.e.* when $q > q_n$), the hydraulic pump is controlled such that the flow rate corresponding to the operating amount of the operation lever 60 is discharged (S700).

As shown in Fig. 3, the flow rate Q discharged from the hydraulic pump 20 refers to a product of the RPM of the engine 10 and the displacement of the hydraulic pump 20 as follows.

$$Q = RPM \times q \text{ (where q is the displacement of the hydraulic pump 20)}$$

The flow rate discharged from the hydraulic pump 20 is varied according to the RPM of the engine 10.

Since the RPM of the engine 10 is adjusted according to a working mode, the flow rate Q is varied due to a RPM difference of the engine caused by the working mode even when the displacement of the hydraulic pump 20 is equal. A spool of the control valve 50 driving the actuator (hydraulic cylinder) 40 has a different position according to the working mode under the condition that a load pressure is equal

Thereby, the signal pressure Pi switching the spool of the control valve 50 is varied according to the working mode, and thus manipulation capability is deteriorated.

However, when the method for compensating the flow rate is applied, reduction of the flow rate caused by decrease of the RPM of the engine is compensated by increase of q. Thus, there is no difference in the operating amount driving the actuator according to the working mode under the condition that the load pressure is equal, so that it is possible to facilitate operation.

As shown in Figs. 2 and 5, even when the signal pressure Pi applied to the control valve 50 is zero, consumption (motive) power of the hydraulic pump 20 is increased when the slant plate of the hydraulic pump 20 is controlled by the flow rate of q2, so that consumption of fuel is increased.

In consideration of this, as indicated by "A" in Fig. 5, when the operation lever 60 is located at the neutral position (*i.e.* when Pi < Pin), the displacement of the hydraulic pump 20 is controlled as small as possible so that the minimum flow rate is discharged from the hydraulic pump 20.

On the other hand, when Pi > Pin as when the flow rate belongs to the section to be compensated at the neutral position (indicated by "B" in Fig. 5), the slant plate of the hydraulic pump 20 is controlled by the flow rate of q2, so that consumption of fuel can be minimized when the pilot signal pressure Pi applied to the control valve 50 is zero.

Therefore, when the operation lever 60 is located at the neutral position, the displacement of the hydraulic pump 20 is controlled as small as possible (here, the RPM of the engine is high). By contrast, when the flow rate belongs to the section to be compensated at the neutral position, the slant plate of the hydraulic pump 20 is increased (here, the RPM of the engine is low). Even if the RPM of the engine becomes different according to the working condition, when the operation lever is manipulated at the same operating amount, it can be seen that a driving amount of the actuator is identical.

As set forth above, the method for compensating the flow rate when the operation lever of construction equipment is placed at the neutral position in accordance with the present invention has advantages as follows.

The discharged flow rate of the hydraulic pump is previously set according to the working mode, and the actuator is identically driven according to the operating amount of the operation lever even when the RPM of the engine becomes different. Thereby, the manipulation capability can be improved.

Further, when the operation lever is located at the neutral position, the discharged flow rate of the hydraulic pump is minimized. Thereby, it is possible to reduce the consumption of fuel.

## Claims

**1.** A method for compensating a flow rate at a neutral position of an operation leve (60) of construction equipment, in which the construction equipment has a hydraulic pump (20) connected to an engine (10), an actuator (40) connected to the hydraulic pump (20) and driving a working unit, a control valve (50) installed on a fluid channel between the hydraulic pump (20) and the actuator (40), the operation lever (60) manipulated by an operator and generating an operating signal ($p_i$) for driving the working unit, 0means for detecting (70) an operating amount of the operation lever (60), means for detecting (80) RPM (revolutions per minute) of the engine (10), a controller (90) controlling the control valve (60) in response to the operating signal ($p_i$) depending on the operating amount of the operation lever and the detecting signal depending on the RPM of the engine, the method comprising the steps of:

setting a first flow rate (q) required according to the operating amount of the operation leve, **characterized by**:
setting a second flow rate $q_n$ required according to the RPM of the engine;
evaluating whether the operation lever (60) is located at the neutral position by the operating signal ($p_i$) and when the operation lever (60) is located at the neutral position, controlling a displacement of the hydraulic pump (20) to discharge a minimum flow rate from the hydraulic pump (20):
when the operation lever (60) is not located at the neutral position and when the second flow rate ($q_n$) for compensating the engine rpm is more than the first flow rate (q) for the operation lever (60), controlling the hydraulic pump (20) to discharge the second flow rate for compensating the engine rpm ($q_n$); and
when the operation lever (60) is not located at the neutral position and when the first flow rate (q) for the operation lever (60) is more than the second flow rate ($q_n$) for compensating the engine rpm, controlling the hydraulic pump (20) to discharge the flow rate (q) corresponding to the operating amount of the operation lever (60).

**2.** The method as set forth in claim 1 wherein the operation lever (60) makes use of any one of an electrical operation lever and a hydraulic operation lever.

## Patentansprüche

**1.** Verfahren zum Kompensieren eines Förderstroms in einer Neutralstellung eines Bedienungshebels (60) einer Baumaschine, wobei die Baumaschine Folgendes aufweist: eine mit einem Motor (10) verbundene Hydraulikpumpe (20), einen Stellantrieb (40), der mit der Hydraulikpumpe (20) verbunden ist und eine Arbeitseinheit antreibt, ein Steuerventil (50), das in einem Fluidkanal zwischen der Hydraulikpumpe (20) und dem Stellantrieb (40) eingebaut ist, den Bedienungshebel (60), der von einem Bediener gehandhabt wird und ein Betriebssignal (Pi) erzeugt, um die Arbeitseinheit anzutreiben, Mittel zum Erfassen (70) eines Bedienungsausmaßes des Bedienungshebels (60), Mittel zum Erfassen (80) der Drehzahl (Umdrehungen pro Minute) des Motors (10), eine Steuereinheit (90), die das Steuerventil (50) in Reaktion auf das Betriebssignal (Pi), das vom Bedienungsausmaß des Bedienungshebels (60) abhängt, und vom Erfassungssignal, das von der Drehzahl des Motors abhängt, steuert, wobei das Verfahren die folgenden Schritte umfasst:

Festsetzen eines ersten Förderstroms (q), der gemäß dem Bedienungsausmaß des Bedienungshebels erforderlich ist, **gekennzeichnet durch** das Festsetzen eines zweiten Förderstroms (qn), der gemäß der Drehzahl des Motors erforderlich ist;
anhand des Betriebssignals (Pi) erfolgendes Beurteilen, ob sich der Bedienungshebel (60) in der Neutralstellung befindet, und wenn sich der Bedienungshebel (60) in der Neutralstellung befindet, Steuern einer Verdrängung der Hydraulikpumpe (20), um einen minimalen Förderstrom aus der Hydraulikpumpe (20) auszustoßen;
wenn sich der Bedienungshebel (60) nicht in der Neutralstellung befindet und wenn der zweite Förderstrom (qn) zur Kompensation der Motordrehzahl größer als der erste Förderstrom (q) für den Bedienungshebel (60) ist, Steuern der Hydraulikpumpe (20), um den zweiten Förderstrom zur Kompensation der Motordrehzahl (qn) auszustoßen; und
wenn sich der Bedienungshebel (60) nicht in der Neutralstellung befindet und wenn der erste Förderstrom (q) für den Bedienungshebel (60) größer als der zweite Förderstrom (qn) zur Kompensation der Motordrehzahl ist, Steuern der Hydraulikpumpe (20), um den Förderstrom (q) auszustoßen, der dem Bedienungsausmaß des Bedienungshebels (60) entspricht.

**2.** Verfahren nach Anspruch 1, wobei bei dem Bedienungshebel (60) einer von einem elektrischen Bedienungshebel und einem hydraulischen Bedienungshebel verwendet wird.

## Revendications

**1.** Une méthode pour compenser un débit dans une position neutre d'un levier de fonctionnement (60) d'un équipement de construction, dans laquelle l'équipement de construction possède une pompe hydraulique (20) connectée à un moteur (10), un actionneur (40), connecté à la pompe hydraulique (20) et entraînant une unité de travail, une soupape de contrôle (50) installée sur un canal de fluide entre la pompe hydraulique (20) et l'actionneur (40), le levier de fonctionnement (60) étant manipulé par un opérateur et générant un signal de fonctionnement (Pi) pour entraîner l'unité de travail, un moyen de détection (70) d'une quantité de fonctionnement du levier de fonctionnement (60), un moyen de détection (80) de tr/min (tours par minute) du moteur (10), un contrôleur (90) contrôlant la soupape de contrôle (60) en réponse au signal de fonctionnement (Pi), dépendant de la quantité de fonctionnement du levier de fonctionnement et le signal de détection dépendant du tr/min. du moteur, la méthode comprenant les étapes de :

Réglage d'un premier débit (q) requis selon la quantité de fonctionnement du levier de fonctionnement, **caractérisé par** : le réglage d'un deuxième débit (qn) requis selon le tr/min. du moteur ;
Évaluation pour savoir si le levier de fonctionnement (60) est situé dans la position neutre par le signal de fonctionnement (Pi) et lorsque le levier de fonctionnement (60) est situé dans la position neutre, contrôle d'un déplacement de la pompe hydraulique (20) pour décharger un débit minimum de la pompe hydraulique (20) ;
Lorsque le levier de fonctionnement (60) ne se situe pas dans la position neutre et lorsque le deuxième débit (qn) pour compenser le tr/min. du moteur est supérieur au premier débit (q) pour le levier de fonctionnement (60), contrôle de la pompe hydraulique (20) pour décharger le deuxième débit pour compenser le tr/min. du moteur (qn) ; et
Lorsque le levier de fonctionnement (60) ne se situe pas dans la position neutre et lorsque le premier débit (q) pour le levier de fonctionnement (60) est supérieur au deuxième débit (qn) pour compenser le tr/min. du moteur, contrôle de la pompe hydraulique (20) pour décharger le débit (q) correspondant à la quantité de fonctionnement du levier de fonctionnement (60).

**2.** La méthode telle que revendiquée dans la revendication 1 où le levier de fonctionnement (60) utilise un levier de fonctionnement électrique et un levier de fonctionnement hydraulique.

Fig. 1

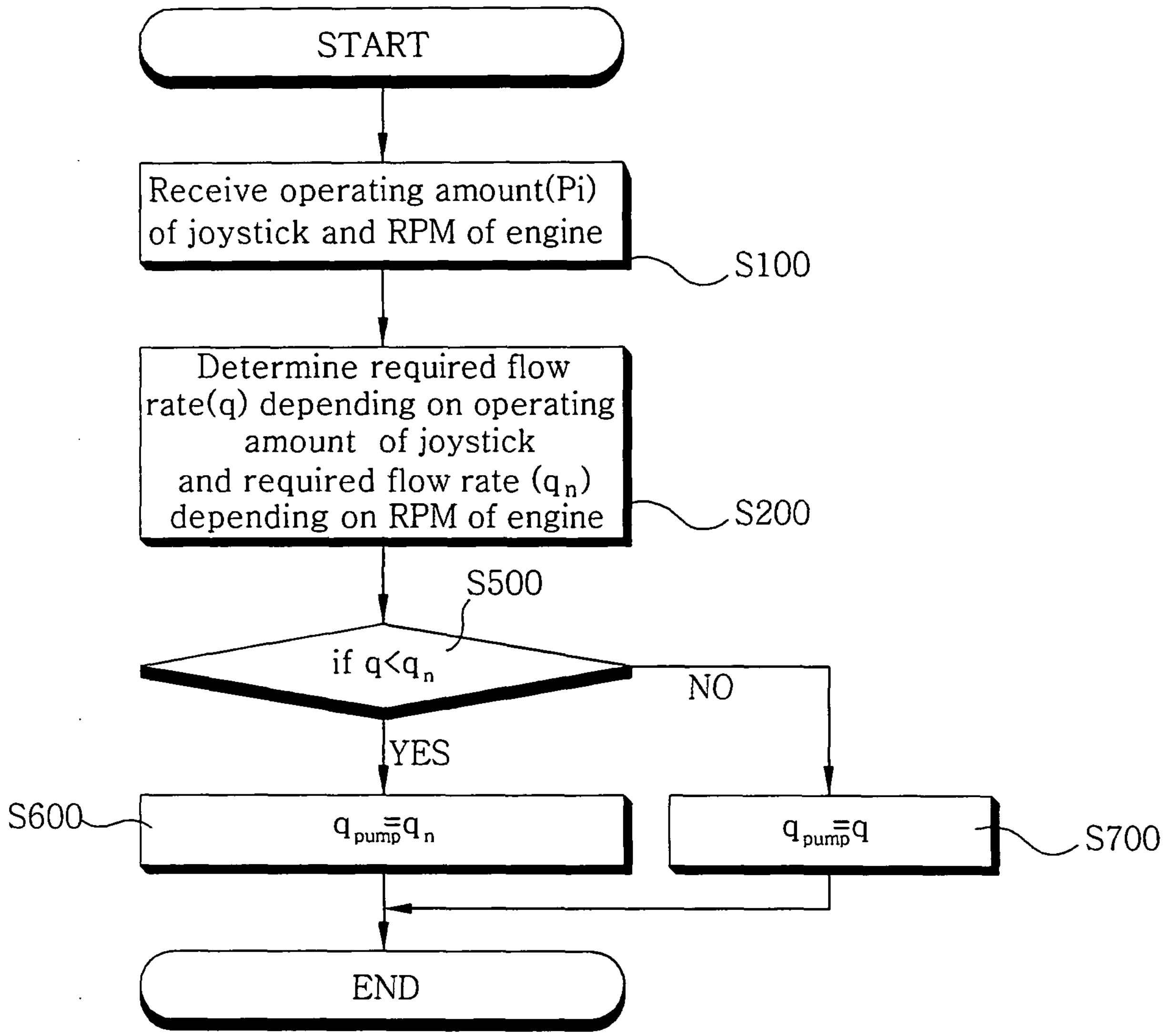
START
Receive operating amount(Pi) of joystick and RPM of engine
S100
Determine required flow rate(q) depending on operating amount of joystick and required flow rate ($q_n$) depending on RPM of engine
S200
S500
if $q<q_n$
NO
YES
S600
$q_{pump}=q_n$
$q_{pump}=q$
S700
END

Fig. 2

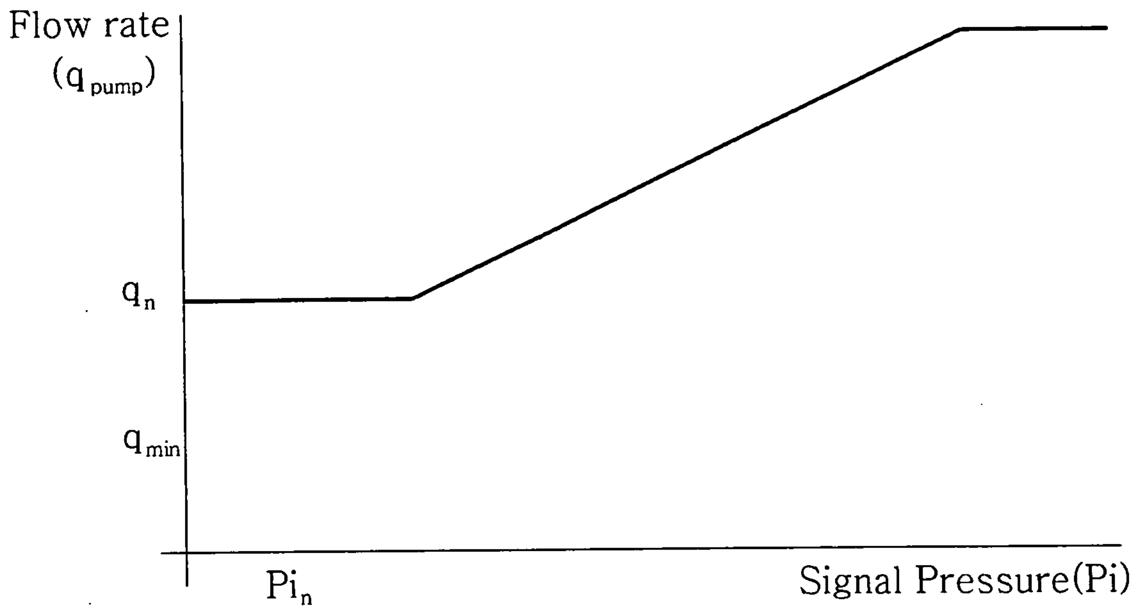

**Fig. 3**

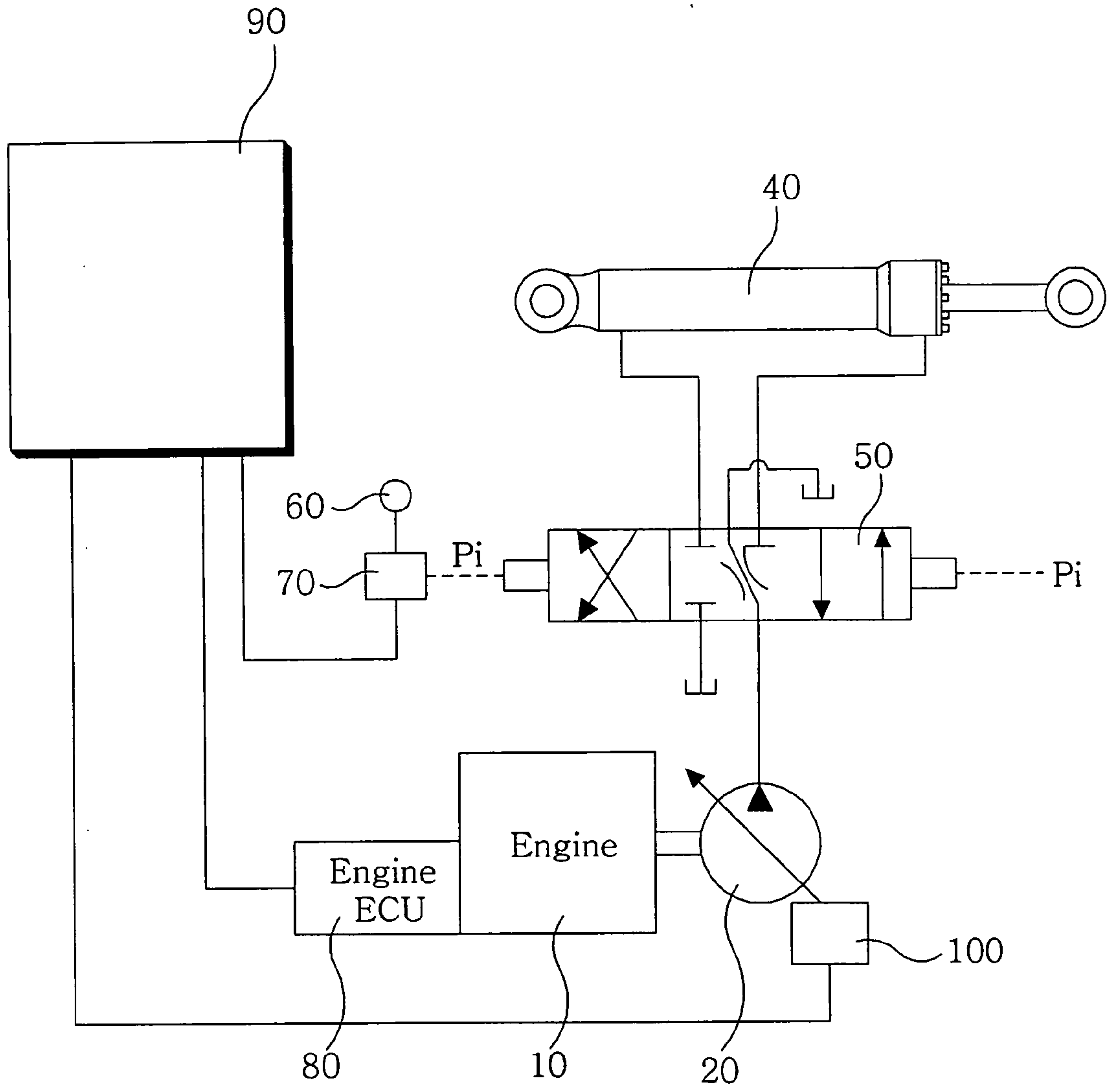

Fig. 4

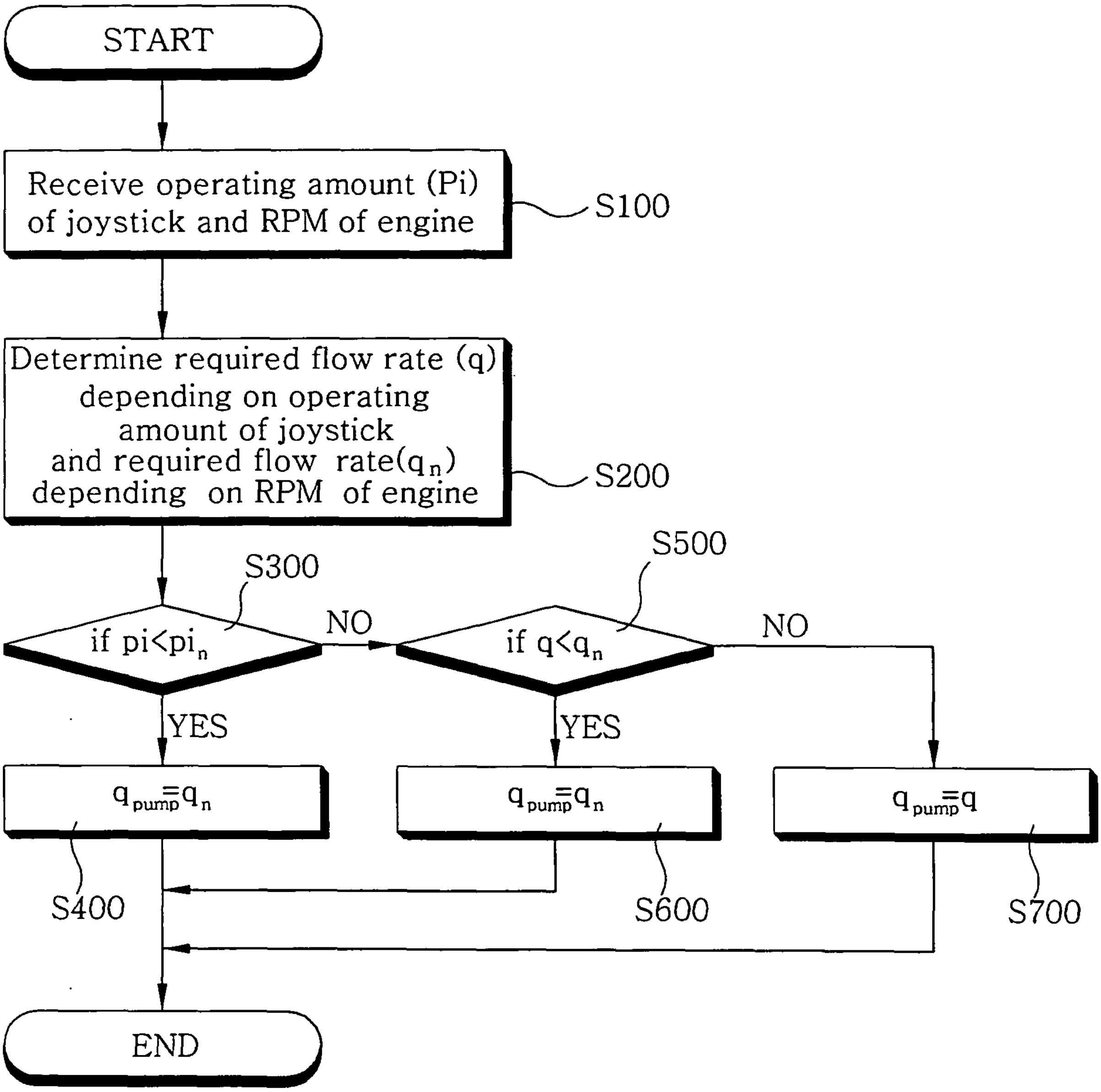
START
Receive operating amount (Pi) of joystick and RPM of engine
S100
Determine required flow rate (q) depending on operating amount of joystick and required flow rate(qn) depending on RPM of engine
S200
S300
if pi<pin
NO
S500
if q<qn
NO
YES
YES
qpump=qn
qpump=qn
qpump=q
S400
S600
S700
END

**Fig. 5**

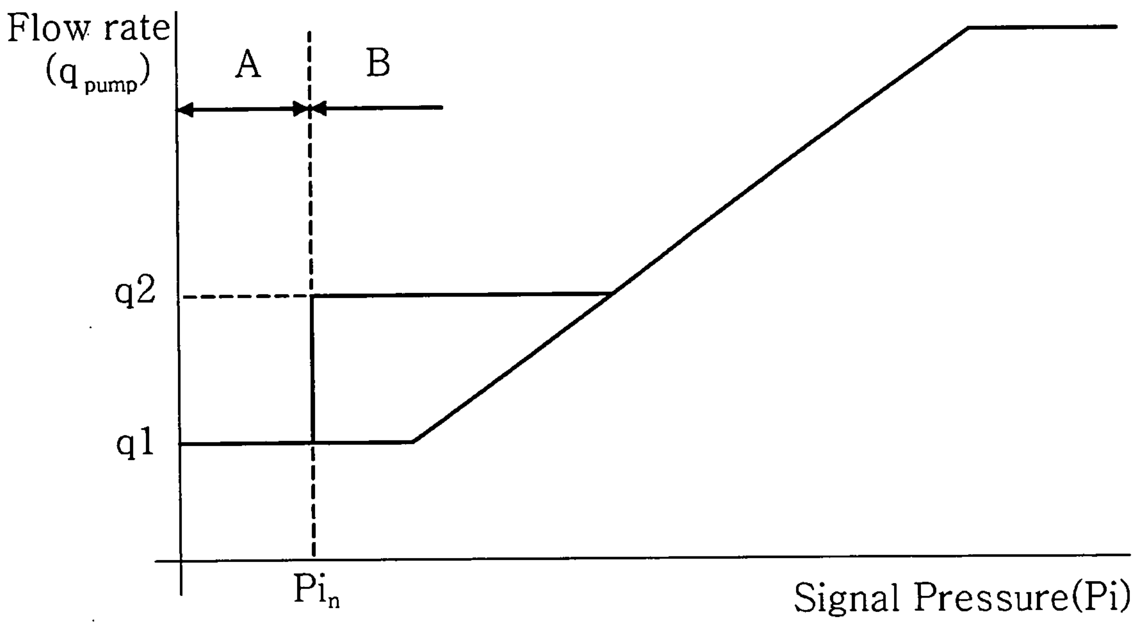

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6173572 B1
- EP 0848113 A1